# EUROPEAN PATENT APPLICATION

(11) **EP 4 018 833 A1**
(43) Date of publication of application: **29.06.2022**
(21) Application number: 20020664.7
(22) Date of filing: 30.12.2020
(51) Int. Cl.: A21D 8/00, A21D 8/02, A21D 10/00, A21D 13/00, A21D 13/50, A21D 15/00, A21D 15/02, A21D 6/00, A21D 2/16, A21D 2/26

(54) **SOLID BISCUIT DOUGH WITH REDUCED DENSITY AND PRODUCTION METHOD THEREOF**

(30) Priority: 24.12.2020 TR 202021657
(71) Applicant: Eti Gida Sanayi Ve Ticaret Anonim Sirketi, 26110 Eskisehir (TR)
(72) Inventor: Marasli, Serdar, 26110 Eskisehir (TR)
(74) Representative: Dereligil, Ersin

(57) **Abstract**

The invention relates to a solid biscuit dough of which the density is reduced for use in biscuit making and a production method of said biscuit dough.

## Description

### TECHNICAL AREA

The invention relates to a solid biscuit dough of which the density is reduced for use in biscuit making and a production method of said biscuit dough.

### PRIOR ART

Biscuit dough is basically divided into two as hard and soft biscuit dough according to the amount of water they contain. Biscuit types to be produced are also reclassified according to dough preparation methods (fermented, conditioned etc.) and dough processing methods (rotary, sheet, extruder, wire cutting, co-extruder, etc.). Rotary-type solid biscuit doughs have low water content (3-6% by weight). Raw materials such as 50-65% by weight of wheat flour, 12-20% by weight of oil, 14-20% by weight of sugar, 1-4% by weight of reducing sugars/glucose syrups, 0.5-10% by weight of foodstuffs (milk, milk powder, egg, cocoa powder etc.), 0.5-3.0% by weight of leavening agents (sodium and ammonium bicarbonate etc.)as enrichment ingredients (milk, milk powder, egg, cocoa powder etc.), 0.5-3.0% by weight of leavening agents (sodium and ammonium bicarbonate etc.), 0.1-0.6% by weight of salt, 0.1-0.6% by weight of emulsifiers (soybean lecithin, GMS etc.) 3-6% by weight of water, 0.5-1.0% by weight of acidity regulator (SAPP etc.) and 0.01-0.06% by weight of flavorings are used in the said doughs.

Rotary-type solid biscuit dough is prepared in three stages in "Z" type dough mixers having double anchors and rotating in opposite directions. In the first stage, oil, sugar, reducing sugars/glucose syrups, milk powder, cocoa powder, emulsifiers, flavorings are added and slow mixing is performed at 30 rpm (revolutions per minute) for approximately 4-6 minutes. This mixture is called "dry cream". In the second stage, leavening agents dissolved in water and raw materials such as salt, milk, egg are added to the dry cream and slow mixing is applied at a speed of about 30 rpm for 4-6 minutes. This mixture is called "wet cream". In the third stage, flour and acidity regulator powder mixtures are added to the wet cream and mixed with slow mixing at 30 rpm between 1-2 minutes. This mixture is called "flour phase". At this stage, the dough temperature is generally between 26-28 °C. Due to the lack of water, temperature and mixing time, the structure is dry and in powder form, there has been no gluten growth and it is inelastic. The dough obtained is fed to two cylinders, which are rotating in opposite directions with respect to each other and positioned in an unsymmetrical (angled) position. Dough sticks to the upper cylinder and is transferred to the lower cylinder according to the rotational speed. The lower cylinder is also called the "blocking drum". The blocking drum squeezes the wrapped dough into the mold drum and scrapes the dough overflowing outside the mold with the help of a blade. Thus, the dough fills the mold cavities. The dough in the mold drum is transferred to the mold band with the help of reverse vacuum and the speed of the mold band, and the dough transferred to the mold band is sent to the oven to be baked.

Due to the amount of water, dough temperature and the amount of protein in the selected flour type, gluten does not develop in rotary-type doughs, thereby gas retention capability in the dough becomes less. Therefore, high amounts of leavening agents are used to make the dough rising sufficiently. The use of plenty of leavening agents is to aim the much biscuit risen and its solubility increased in the mouth due to the excess number of gaps in its internal structure. Rotary-type solid biscuit doughs have high densities (1.20-1.50 gr/cm³) because they are in powder and dry form. It is necessary to use a high amount of leavening agents to develop the texture in the biscuit. Since the excess of the aforementioned leavening agents provides the solubility in the biscuit artificially, the inner structure of the biscuit is hollow and the eating experience is unpleasant. This handicap brought by the state of the art makes rotary-type biscuits similar to each other and makes the product perception as cheap and poor in quality.

During the search conducted in the state of the art, the application of the Publication Number CN104642467 has been found. The subject application discloses a method developed to produce a biscuit product in cookie form. In the said method, basically low-gluten flour is heated together with the egg yolk, followed by flavorings such as vanillin extract and walnut. However, leavening agents are also used in the method subject to the application.

As a result, due to the above mentioned disadvantages and the insufficiency of current solutions, it was necessary to make an improvement in the relevant technical field.

### BRIEF DESCRIPTION OF THE INVENTION

The present invention relates to a solid biscuit dough and production method of said solid biscuit dough, which meets the above requirements, eliminates all disadvantages and brings some additional advantages.

The main object of the invention is to obtain a dough with reduced density by changing the dough preparation method and recipe inputs, which are available in the state of the art. Before the refining process in the method of the invention, the base is prepared with flour-oil mixtures in different proportions. At this stage, sugar, whey powder, milk, milk powder, egg, cocoa powder, invert sugar, emulsifier or water can preferably be added alone or in combinations. The base obtained afterwards is subjected to refining. The gluten proteins are broken down in the resulting base after the refining and surface areas thereof are increased. The mixtures mentioned within the scope of the invention are named as Bases A, B, C etc. In addition, in the method of the invention, the solutions are prepared by which gelatin and egg white powder are dissolved in at least a type of solvent (preferably in water) and mixed with milk proteins, which are optionally used and dissolved in at least one type of solvent (preferably in water), in different proportions and different temperatures. These prepared solutions are named Gelatin Solution A, B, C etc. It has been ensured that the density of the biscuit dough is reduced with one or two stage preparation method and fast (30-60 rpm) or slow (less than 30 rpm) mixing by using the Base Mixture, the Gelatin Solution, the additional sugar, and optionally oil, flour, whey powder, milk, milk powder, egg, cocoa powder, invert sugar, emulsifier and water, alone or in combination.

The object of the invention is to obtain a method of preparing a dough that prevents the dough from rising when mixed with water and preventing the dough from turning into a powder and solid form by allowing gluten to break down into gliadin and glutenine. With the invention, the dough preparation steps have been simplified by differing from the gradual dough preparation methods used in the state of the art. Without using any leavening agents and aeration equipments, the invention has enabled the dough density to reduce to the 0.90 to 1.00 g/cm³ from 1.20 to 1.50 g/cm³, which is the dough density obtained currently, Thus, the invention ensured that a dough with an aerated structure varying between 20-40% by volume is obtained without using any leavening agents and aeration equipment. In addition, the same biscuit rising/thickness was achieved without using 1-1.5% by weight of ammonium bicarbonate and 0.6-0.8% by weight of sodium bicarbonate which are used in the rotary-type biscuit doughs of the state of the art.

Another object of the invention is to present a new method that positively changes the eating experience and increases the dispersion resolution in the mouth. With the invention, the density of the biscuit dough was decreased, it was provided to rise without the use of any leavening agents, and the biscuit inner texture is any longer free of being a hollow and hollowed structure. In this way, a new biscuit category, differentiated from existing rotary doughs, has been created in the state of the art.

The structural and characteristic features and all advantages of the invention will be understood more clearly thanks to the figures given below and the detailed explanation written by making references to these figures. Therefore, the evaluation should be made by taking these figures and detailed explanations into consideration.

### BRIEF DESCRIPTION OF THE FIGURES

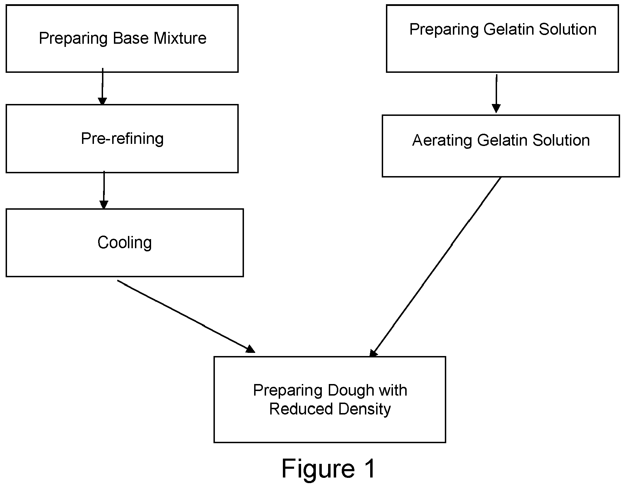

Figure 1 shows the flow chart of production method of the solid biscuit dough with reduced density.

### DETAILED DESCRIPTION OF THE INVENTION

In this detailed description, the preferred applications of the solid biscuit dough and production method thereof as the invention are explained only for a better understanding of the subject and without any restrictive effect.

The invention relates to biscuit dough for use in making biscuits and the production method of said dough. In Figure 1, the flow chart of the biscuit dough production method is given. Accordingly, the method first includes the process step of preparing the base mixture. In the process of preparing the base mixture, flour-oil mixtures by different proportions, which form the base, are prepared from flour and oil, which are the main ingredients of the biscuit. Sugar, whey powder, milk, milk powder, egg, cocoa powder, invert sugar, emulsifier or water are optionally added to the said mixture, alone or in combinations.

The next process step is refining. In this process, the size range of the flour-oil mixture or the mixtures formed by optionally adding sugar, whey powder, milk, milk powder, egg, cocoa powder, invert sugar, emulsifier or water, alone or in combinations, to this mixture is reduced from 50-70 microns to 20-35 microns. Thereby, the surface area of the mixture is increased. Increasing the surface area is important to increase the evenly dispersing efficiency of the gelatin solution, which is to be applied to the said mixtures, within the dough in a homogenized form. The gelatin solution, which is evenly dispersed and whose effect is increased, contributes to reducing the density of the dough and developing its inner structure.

Thanks to the refining stage, the gluten proteins in the flour break down into glutenin and gliadine with the help of a mechanical force without coming together with water. Flour protein, water, temperature and mixing time are essential for gluten formation. The two most important components of gluten formation are flour protein (gluten) and water. Since the temperature and mixing time are not sufficient for gluten formation in the rotary-type doughs, flour proteins want to immediately come together with water and rise even if the water amount is low. This causes the dough to turn into a dry and powdery form for rotary-type doughs with low water content. Flour proteins, broken down into gluten and gliadine by the method of refining, are prevented being immediately combined and risen when they come together with the water and thereby the resulting dough is prevented being in a dry and powder form. The oil also makes the powder mixture suitable for refining. In addition, the oil prevents the flour proteins from coming together with water by surrounding them.

The contents of the powder mixtures (Base A, Base B and Base C etc.) containing flour and oil and subjected to refining are given below in percent by weight. Accordingly, there is 20-80% by weight of flour and 20-80% by weight of oil in the powder mixture content. Sugar, whey powder, milk, milk powder, egg, cocoa powder, invert sugar, emulsifier or water can preferably be added to the said mixture alone or in combinations. Among these optional ingredients, sugar can be added in the ranges of 0-45% by weight, whey powder can be added in the ranges of 0-5% by weight, milk can be added in the ranges of 0-10% by weight, milk powder can be added in the ranges of 0-5% by weight, eggs can be added in the ranges of 0-5% by weight, cocoa powder can be in the ranges of 0-5% by weight, invert sugar can be added in the ranges of 0-8% by weight, emulsifier can be added in the ranges of 0-1% by weight, and water can be added in the ranges of 0-10% by weight. The addition of water is important for the dough to reach a structure that can pass through the rolls.

In a preferred application of the invention, the powder mixture contains 75% by weight of flour and 25% by weight of oil. In the experiments, it has been determined that 75% flour and 25% oil ratios by weight are the most effective rates for refining. Here, the oil surrounds the flour proteins and prevents them from coming together with water. The thickness of the powder mixture obtained is between 20-35 microns, preferably 30 microns. Since the surface area increases more in the mixtures being below 30 microns, the rising potential of the mixture increases by absorbing water. On the other hand, homogeneous mixing of the gelatin solution and the powder mixture in the case of above 30 microns is adversely affected. Therefore, the preferred optimum thickness is 30 microns. Examples of Base A, Base B, Base C and Base D prepared as being examples of different embodiments of the invention are given below.

| **Base A (% by weight)** | |
|---|---|
| Flour | 48 |
| Oil | 26 |
| Sugar | 26 |

| **Base B (% by weight)** | |
|---|---|
| Flour | 80 |
| Oil | 20 |

| **Base C (% by weight)** | |
|---|---|
| Flour | 75 |
| Oil | 25 |

| **Base D (% by weight)** | |
|---|---|
| Flour | 30 |
| Oil | 25 |
| Sugar | 45 |

After preparing the powder mixtures and applying the refining process, the cooling process is started. Accordingly, the final powder mixtures obtained are kept until their temperature reaches 15-20 °C (preferably 17 °C). Thus, the air is easily trapped in the mixture thanks to the cooling process. Therefore, cooling the temperature of this powder mixture to 15-20 °C is one of the important parameters in reducing the density of the dough. When the powder mixture temperature drops to 15 °C or below, the oil begins to crystallize, resulting in the risk of a lumpy structure. This situation has a negative effect on lowering the density. When it is above 20 °C, our final dough temperature reaches 30 °C. This situation causes a negative effect in reducing the density of the dough.

In the method of the present invention, gelatin solution is prepared in order to reduce the density of the dough. In this process step, gelatin (200-260 bloom) and egg white powder are dissolved in at least one kind of solvent (preferably water) and then mixed with in certain proportions with milk protein (casein) which can be optionally used and which is dissolved in at least one kind of solvent (preferably water). If gelatin and optionally milk protein are used, the two can be prepared by together or separately dissolving in at least one kind of solvent (preferably water) between 70-90 °C (preferably 85 °C). The optimum dissolution temperature of gelatin is 85 °C and above. However, when we go above 85 °C, our final dough temperature goes above 30 °C. This situation causes a negative effect in reducing the dough density. In addition, if egg white powder and optionally milk protein are used, the two can be prepared by together or separately dissolving in at least one kind of solvent (preferably water) at a temperature of 20-35 °C (preferably 30 °C). In the preliminary tests, it was determined that the best dissolution temperature of egg white powder was 30 °C.

A gelatin solution is prepared without foaming by dissolving the said ingredients nonsimultaneously or simultaneously in at least one kind of solvent (preferably water) at the appropriate temperature, separately or together. In the process of preparing gelatin solution, on the one hand gelatin is dissolved in at least one kind of solvent (preferably water), on the other hand, egg white powder is dissolved in at least one kind of solvent (preferably water), the milk protein, which can be optionally used, is also dissolved in at least one kind of solvent (preferably water). At this stage, egg white powder and milk protein can be dissolved separately or together in solvent (preferably in water) between 20-35 °C temperature (preferably 30 °C). If gelatin and optionally milk protein are used, they can be dissolved together or separately in a solvent (preferably in water) between 70-90 °C (preferably at 85 °C) at temperatures that will not trigger the gelling property of the the gelatin (preferably greater than 40 °C); it is then cooled preferably to 40-55 °C in order to prevent the gelation from being formed and prevent the egg white from being denatured. The gelatin solution, egg white solution and preferably milk protein (casein) solution are then mixed together at low speed (preferably at a speed of less than 30 rpm), preferably for 5-10 minutes to ensure mixing without foaming. Thus, a non-foamy gelatin solution is prepared thanks to the properties of the mentioned solutions and low speed mixing.

In this process, gelatin, egg white powder and milk proteins are used to act as aerating agents in the next stages. In the said process, milk protein has an increasing effect on gelatin gelation. At the same time, gelatin, egg white powder and milk proteins make it possible to increase the foam capacity and foam stability to be created by mixing gelatin solution with sugar.

Gelatin solution comprises 1-15% by weight (preferably 5%) gelatin (200-260 bloom) by weight, 5-20% (preferably 20%) egg white powder by weight, 0-25% (preferably 10%) milk protein (casein) by weight and 65-94% (preferably 65%) water by weight. Milk protein (casein) is not indispensable for gelatin solution, and its use is optional. The preferred proportions stated here are the proportions determined in the pre-tests. Thanks to these proportions, the density is reduced more, the aerated biscuit dough structure is preserved and a large porous structure is obtained.

Examples of Gelatin Solution in different proportions are given below.

| **Gelatin Solution A (% by weight)** | |
|---|---|
| Gelatine | 10 |
| Water | 70 |
| Egg white powder | 12 |
| Milk protein | 8 |

| **Gelatin Solution B (% by weight)** | |
|---|---|
| Gelatine | 15 |
| Water | 75 |
| Egg white powder | 10 |

| **Gelatin Solution C (% by weight)** | |
|---|---|
| Gelatine | 5 |
| Water | 75 |
| Egg white powder | 20 |

| **Gelatin Solution D (% by weight)** | |
|---|---|
| Gelatine | 5 |
| Water | 65 |
| Egg white powder | 20 |
| Milk protein | 10 |

The dough of reduced density is obtained by mixing powder mixture (Base A-B-C etc.) and gelatin solution (Gelatin Solution A-B-C etc.) with additional sugar in different proportions, and optionally with oil, flour, whey powder, milk, milk powder, egg, cocoa powder, invert sugar, emulsifier or water, which can be used alone or in combination. In this process step, first the gelatin solution and sugar are whisked at high speed (preferably 60 rpm) for 1-3 minutes. Thus, together with the whisking, an aerated foamy gelatin solution was obtained. The density of this foamy structure varies between 0.20-0.35 g/cm³, preferably 0.27 g/cm³. At this stage of the invention, the aeration properties of gelatin, egg white powder, and milk protein that can be used optionally, are used.

In the invention, unlike the prior art applications, no foam is formed in the gelatin solution formation stage and therefore foam-based properties are not utilized at this stage. In the method of the invention, the foamy structure is prepared by whisking the gelatin solution and sugar at high speed (preferably 60 rpm) for 1-3 minutes just before mixing of the gelatin solution and the base mixture.The base mixture is added to the obtained mixture and mixing is applied at low speed (preferably 30 rpm) for 1-2 minutes. Then, oil, flour, whey powder, milk, milk powder, egg, cocoa powder, invert sugar, emulsifier or water can be optionally added to the mixture alone or in combinations; the mixing process is continued preferably at low speed (preferably 30 rpm) for 2-5 minutes. It is important that the mixing process is carried out at the said low speeds in order not to lose the foamy structure. In this way, a dough of reduced density is obtained.

The dough of reduced density obtained by the method of the invention comprises 55-70% (preferably 60%) by weight of powder base mixture, 10-20% (preferably 15%) by weight of gelatin solution, 10-30% (preferably 15%) by weight of sugar. Also, 0-10% by weight (preferably 10%) of oil by weight, 0-10% (preferably 10%) of flour, 0-5% by weight of whey powder, 0-5% milk by weight of , 0-5% by weight of milk powder, 0-5% by weight of eggs, 0-5% cocoa powder by weight, 0-5% by weight of invert sugar, 0-5% by weight of emulsifier and 0-5% by weight of water can be optionally added alone or in combinations. For the invention, oil, flour, whey powder, milk, milk powder, egg, cocoa powder, invert sugar, emulsifier and water are not indispensable and can preferably be applied.

The temperature of the final dough obtained is between 25-30 °C, preferably 27 °C. The preferred figures mentioned here and above are the rates determined in the pre-tests.

Below are examples of dough mixtures prepared within the scope of the invention:

**Dough 1:**

| **Ingredients (% by weight)** | |
|---|---|
| Base C | 68 |
| Gel. Sol. D | 16 |
| Sugar | 16 |

First, Gelatin solution B and sugar are mixed at high speed (preferably 60 rpm) for 1-3 minutes to form foam. Then, Base C is added to this mixture and the mixing is continued at low speed (preferably 30 rpm) and a dough of reduced density is obtained.

**Dough 2:**

| **Ingredients (% by weight)** | |
|---|---|
| Base C | 60 |
| Gel. Sol.D | 15 |
| Sugar | 15 |
| Oil | 10 |

First, the sugar is whisked with Gelatin Solution D at high speed (preferably 60 rpm) for 1-3 minutes and foam is formed. Then, oil is added to this mixture and mixing is continued at low speed (preferably 30 rpm). Base C is added to the obtained mixture and the mixing is continued at low speed (30 rpm) and a dough of reduced density is obtained.

**Dough 3:**

| **Ingredients (% by weight)** | |
|---|---|
| Base B | 55 |
| Gel. Sol. A | 15 |
| Sugar | 20 |
| Flour | 10 |

First, the sugar is whisked with Gelatin Solution A at high speed (preferably 60 rpm) for 1-3 minutes and foam is formed. Then Base B is added to this mixture and the mixing is continued at low speed (preferably 30 rpm). Flour is added to the obtained mixture and mixed at low speed (preferably 30 rpm) for 2-5 minutes and a dough of reduced density is obtained.

The invention has enabled the biscuit dough density to reduce to 0.90 to 1.00 g/cm³ from 1.20 to 1.50 g/cm³, which is the dough density obtained in the current situation, without using any leavening agents and aeration equipment. It has been reached to the same biscuit rising/thickness, which was obtained using 1-1.5% by weight of ammonium bicarbonate and 0.6-0.8% by weight of sodium bicarbonate which are used in a standard rotary dough, without adding any leavening agents to the dough. Depending on the preference, the ingredients known as enrichment ingredients, such as milk, milk powder, cocoa powder, egg, whey, whey powder, flavorings etc., can be mixed in certain proportions with this biscuit dough with reduced density.

In order to solve the problems in the technical field and to fulfill the mentioned purposes, the invention is a biscuit dough production method for use in the biscuit making and it comprises the following process steps:
- Preparing a mixture by mixing flour and oil,
- Obtaining a powder mixture by applying a refining to said mixture to reduce the size range to 20-35 micro range,
- Cooling the temperature of the refined powder mixture to the range of 15-20 °C,
- Preparing gelatin solution by dissolving gelatin (200-260 bloom) and egg white powder in at least one kind of solvent (preferably in water),
- Creating foam by mixing the gelatin solution and sugar,
- Adding the powder mixture, which is cooled to the range of 15-20 °C, to the foam formed by mixing the gelatin solution and sugar.

## Claims

1. A production method for a solid biscuit dough of reduced density for use in the biscuit making; **characterized in that** it comprises the following steps:
- Preparing a mixture by mixing flour and oil,
- Obtaining a powder mixture by applying a refining to said mixture to reduce the size range to 20-35 micro range,
- Cooling the temperature of the refined powder mixture to the range of 15-20 °C,
- Preparing gelatin solution by dissolving gelatin and egg white powder in at least one kind of solvent,
- Creating foam by mixing the gelatin solution and sugar,
- Adding the powder mixture, which is cooled to the range of 15-20 °C, to the foam formed by mixing the gelatin solution and sugar.

2. The method according to claim 1, **characterized in that** it comprises the process step of preparing powder mixture containing 20-80% by weight of flour and 20-80% by weight of oil.

3. The method according to claim 1, **characterized in that** it comprises the process step of preparing powder mixture containing 0-45% by weight of sugar, 0-5% by weight of whey powder, 0-10% by weight of milk, 0-5% by weight of milk powder, 0-5% by weight of egg, 0-5% by weight of cocoa powder, 0-8% by weight of invert sugar, %0-1,0 by weight of emulsifier, %0-10% by weight of water.

4. The method according to claim 1, **characterized in that** it comprises the process step of refining the size of the mixture prepared by mixing flour and oil to be 30 micron.

5. The method according to claim 1, **characterized in that** it comprises the process step of cooling the temperature of the refined powder mixture to 17 °C.

6. The method according to claim 1, **characterized in that** it comprises the process step of preparing gelatin and milk protein by together or separately dissolving in at least one solvent at a temperature of 70-90 °C.

7. The method according to claim 1, **characterized in that** it comprises the process step of preparing egg white powder and milk protein by together or separately dissolving in at least one solvent at a temperature of 20-35 °C.

8. The method according to claim 1, **characterized in that** it comprises the step of a cooling process preferably to 40-55°C, in order to prevent the gelation from being formed and prevent the egg white from being denatured, after dissolution processes.

9. The method according to claim 1, **characterized in that** it comprises the process step of preparing the gelatin solution by mixing the dissolved gelatin, dissolved egg white powder and the dissolved milk protein to each one to another.

10. The method according to claim 1, **characterized in that** it comprises the process step of preparing gelatin solution by mixing the gelatin solution, egg white powder solution and milk protein solution together for 5-10 minutes at a speed less than 30 rpm in order to ensure the only mixing without creating foam.

11. The method according to claim 10, **characterized in that** it comprises the process step of preparing a gelatin solution containing 1-15% by weight of gelatin, 5-20% by weight of egg white powder, 0-25% by weight of milk protein and 65-94% by weight of water.

12. The method according to claim 1, **characterized in that** it comprises the process step of whisking the gelatin solution and sugar at 60 rpm for 1-3 minutes.

13. A biscuit dough according to any of the above claims, **characterized in that** it comprises 55-70% by weight of powder mixture, 10-20% by weight of gelatin solution and 10-30% by weight of sugar.

14. The biscuit dough according to claim 13, **characterized in that** it comprises 0-10% by weight of oil, 0-10% by weight of flour, 0-5% by weight of whey powder, 0-5% by weight of milk, 0-5% by weight of milk powder, 0-5% by weight of egg, 0-5% by weight of cocoa powder, 0-5% by weight of invert sugar, 0-5% by weight of emulsifier, 0-5% by weight of water.

15. The biscuit dough according to claims 13-14, **characterized in that** it has a density of 0,90-1,00 g/cm³.
